Europäisches Patentamt

European Patent Office

Office européen des brevets

(11) Veröffentlichungsnummer: **0 300 470**
**A1**

(12) **EUROPÄISCHE PATENTANMELDUNG**

(21) Anmeldenummer: 88111719.6

(22) Anmeldetag: 20.07.88

(51) Int. Cl.⁴: **B60R 22/26**

(30) Priorität: 21.07.87 DE 3724134

(43) Veröffentlichungstag der Anmeldung:
25.01.89 Patentblatt 89/04

(84) Benannte Vertragsstaaten:
**DE ES FR GB IT SE**

(71) Anmelder: **BRITAX-KOLB GMBH & CO**
**Theodor-Heuss-Strasse 2**
**D-8060 Dachau(DE)**

(72) Erfinder: **Knabel, Walter, Dr.**
**Nock-Strasse 13**
**D-8110 Murnau/Staffelsee(DE)**
Erfinder: **Mayer, Josef**
**Freiherrn-Strasse 2**
**D-8061 Weichs(DE)**
Erfinder: **Wentker, Stephan**
**Troppauer-Strasse 8A**
**D-8060 Dachau(DE)**

(74) Vertreter: **Gossel, Hans K., Dipl.-Ing. et al**
**Rechtsanwälte E. Lorenz - B. Seidler M.**
**Seidler - Dipl.-Ing. H.K. Gossel Dr. I. Philipps**
**- Dr. P.B. Schäuble Dr. S. Jackermeier -**
**Dipl.-Ing. A. Zinnecker**
**Widenmayerstrasse 23 D-8000 München**
**22(DE)**

(54) Vorrichtung zum Ankoppeln des mit dem Gurtschloss eines Sicherheitsgurtes versehenen Tragstücks an ein fahrzeugfestes Halteteil.

(57) Ein mit dem Gurtschloß, Endbeschlag oder Aufroller eines Sicherheitsgurtes versehenes Tragstück ist im Gefahrenfall an ein fahrzeugfestes Halteteil ankoppelbar. Um auch schon geringere, unterhalb von einem Crash liegende Beschleunigungskräfte zur Vermeidung von Zerstörungen in fahrzeugfeste Halteteile einleiten zu können, ist das Tragstück oder ein mit diesem verbundenes Gehäuseteil mit einem beweglichen Kupplungsteil verbunden, das in einer Führung eines Sitzrahmenbleches o.dgl. derart geführt oder derart getriebemäßig mit diesem verbunden ist, daß ein auf das Gurtschloß ausgeübter Zug dieses in seinen kuppelnden Eingriff mit dem fahrzeugfesten Halteteil bewegt.

## Vorrichtung zum Ankoppeln des mit dem Gurtschloß eines Sicherheitsgurtes versehenen Tragstücks an ein fahrzeugfestes Halteteil

Die Erfindung betrifft eine Vorrichtung zum verriegelnden Ankoppeln des mit dem Gurtschloß eines Sicherheitsgurtes versehenen Tragstückes im Gefahrenfall an ein fahrzeugfestes Halteteil.

Zur Erhöhung des Bedienungskomforts kann es zweckmäßig sein, das mit dem Gurtschloß eines Sicherheitsgurtes versehene Tragstück mit einem Sitzrahmenblech oder einem Seitenblech des Sitzes zu verbinden, so daß die auf dem Sitz zu sichernde Person beim Einführen der Schließzunge in das Gurtschloß dieses immer an der gleichen gewohnten Stelle vorfindet, und zwar unabhängig davon, auf welche Höhe oder welche Längsstellung der Sitz eingestellt ist.

Ist der Fahrzeugsicherheitsgurt zur Erhöhung der Sicherheit mit einem Gurtstrammer versehen, der in der gleichzeitig eingereichten Patentanmeldung mit dem Titel "Gurtstrammer für Fahrzeugsicherheitsgurte" beschrieben worden ist, ist das das Gurtschloß tragende Tragstück in einem mit dem Sitzrahmenblech oder einem anderen Fahrzeugteil verbundenen Gehäuse längsverschieblich geführt, das mit einer Einrichtung versehen ist, die eine Einzugsbewegung des Tragstücks gestattet und dessen Bewegung in Gegenrichtung blockiert. Sitzrahmenbleche, Seitenbleche des Sitzes, Verriegelungsgehäuse für das mit dem Gurtschloß versehene Tragstück und andere der Halterung des Tragstücks dienende Teile können in der Regel aber nur mit einem erheblichen das Fahrzeug verteuernden Aufwand so steif und fest ausgeführt werden, daß sie im Falle eines Crash oder Unfalls die auf den Sicherheitsgurt wirkenden Zugkräfte sicher aufzunehmen und abzuleiten vermögen. Es besteht daher ein Bedürfnis, eine Vorrichtung der eingangs angegebenen Art zu schaffen, die das Tragstück des Gurtschlosses halternde Zwischenkonstruktionen und Gehäuse entlastet und das Tragstück im Gefahrenfall unmittelbar an ein fahrzeugfestes Halteteil ankuppelt.

Bei einer aus der DE-OS 28 00 261 bekannten Vorrichtung der eingangs angegebenen Art ist eine das Gurtschloß tragende Zuglasche mit einer Wandung eines im Querschnitt etwa rechteckigen Führungsgehäuses durch einen Abscherniet verbunden. Das Führungsgehäuse ist durch Distanzhalter an einem Beschlagteil oder dem Sitzrahmen des Fahrzeugsitzes befestigt. An der der Zuglasche gegenüberliegenden Innenseite des Führungsgehäuses ist eine Zahnlasche, die mit ihrem unteren Ende mit der Sitzschiene verankerbar ist, derart geführt, daß diese bei einer Höhenverstellung des Sitzes relativ zu dem Führungsgehäuse verschoben wird. Die das Gurtschloß tragende Zuglasche weist an ihrem unteren Abschnitt zwei Sperrzähne auf, die in die Zähne der Zahnlasche passen. Wird die Zuglasche über das Gurtschloß von der den Sicherheitsgurt tragenden Person aufgrund von einem Unfall oder Crash entsprechenden Beschleunigungskräften ausgezogen, wird der die Zuglasche mit dem Führungsgehäuse verbindende Niet abgeschert, so daß der untere Abschnitt der Zuglasche durch geneigte Schubflächen in Richtung auf die Zahnlasche verschoben wird, die Sperrzähne der Zuglasche mit den Zähnen der Zahnlasche in Eingriff kommen und dadurch die Zuglasche an die mit der Verstellschiene verbundene Zahnlasche verankert wird.

Üblicherweise treten auch bei einem scharfen Bremsen und/oder kleineren Unfällen bereits erhebliche auf die den Sicherheitsgurt tragende Person wirkende Beschleunigungskräfte auf, die unterhalb von einem Crash entsprechenden Beschleunigungskräften liegen, dennoch aber zu einer erheblichen Belastung und Beanspruchung des Sitzes führen, so daß auch derartige Kräfte unmittelbar in den Fahrzeugaufbau eingeleitet werden sollten.

Aufgabe der Erfindung ist es daher, eine Vorrichtung der eingangs angegebenen Art zu schaffen, die bei einfachem und funktionssicherem Aufbau auch geringere Beschleunigungskräfte die unterhalb von einem Crash entsprechenden Beschleunigungskräften liegen, zerstörungsfrei aufzunehmen und in fahrzeugfeste Halteteile einzuleiten vermag.

Erfindungsgemäß wird diese Aufgabe dadurch gelöst, daß das Tragstück oder ein mit diesem verbundenes Gehäuseteil o.dgl. mit einem beweglichen Kupplungsteil verbunden ist, das in einer Führung eines Sitzrahmenbleches o.dgl. derart geführt oder derart getriebemäßig mit diesem verbunden ist, daß ein auf das Gurtschloß ausgeübter Zug dieses in seinen kuppelnden Eingriff mit dem fahrzeugfesten Halteteil bewegt. Ein auf das Gurtschloß über den Sicherheitsgurt ausgeübter Zug, dessen Zugkraft oberhalb der Zugkräfte liegt, die bei normalen Bewegungen der zu sichernden Person ein Abziehen des Gurtes von der Gurtrolle gestatten, ohne daß aufgrund des sogenannten gurtsensitiven Systems eine Blockierung der Gurtrolle eintritt, ist ein Anzeichen dafür, daß der Gurt zur Sicherung der Person zu blockieren und demgemäß das Tragstück an das fahrzeugfeste Halteteil anzukuppeln ist, wobei diese Ankupplung auf kürzestem Wege erfolgen soll, also ohne unnötig langes Ausziehen des Tragstücks des Gurtschlosses.

Nach einer vorteilhaften Ausführungsform der Erfindung ist vorgesehen, daß an den unteren Endbereich des Tragstücks ein das erste Kupplungsteil bildender, mit einer Verzahnung versehener Verriegelungshebel angelenkt ist, der im Abstand von seiner Gelenkachse mit einer Bohrung oder einem Zapfen versehen ist, die kurbelartig mit Zapfen oder einer Bohrung des Sitzbleches o.dgl. in der Weise verbunden sind, daß ein auf das Tragstück ausgeübter Zug den Verriegelungshebel in Richtung auf einen gelenkig am Fahrzeug gehaltenen und mit einer Gegenverzahnung versehenen Zuganker verschwenkt, so daß die Verzahnungen in kuppelnden Eingriff miteinander kommen. Die Exzentrizität zwischen dem Zapfen und der wie ein Kurbelzapfen wirkenden Gelenkachse läßt sich so klein wählen, daß nur ein kurzer Auszug des Tragstücks eine so große Verschwenkung des Verriegelungshebels bewirkt, daß dieser in den kuppelnden Eingriff mit dem Zuganker gelangt.

Zweckmäßigerweise trägt der Verriegelungshebel an seinem freien Ende ein verzahntes Teil mit gegen die Schwenkachse gerichteten Zähnen. Der Verriegelungshebel kann eine U-förmige Form aufweisen, wobei er im Bereich der freien Enden seiner Schenkel gelagert ist und die Schenkel durch ein mit der Innenverzahnung versehenes Teil miteinander verbunden sind.

Zweckmäßigerweise ist der Zuganker durch eine Feder in Anlage an die verlängerte Schwenkachse des Tragstücks oder an ein mit diesem verbundenes Teil in Eingriffsposition gehalten.

Nach einer anderen Ausführungsform der Erfindung ist vorgesehen, daß das Tragstück in einem vorzugsweise am Fahrzeugsitz befestigten Gehäuse im Gefahrenfalle verriegelbar und mit dem Gehäuse ein Riegel verbunden ist, der formschlüssig in einen mit dem Fahrzeug fest verbundenen Zuganker einfällt, wenn auf das Gehäuse über das Tragstück des Gurtschlosses ein Zug ausgeübt wird. Das Gehäuse kann zusätzlich der Aufnahme eines Gurtstrammers dienen.

Nach einer vorteilhaften Ausführungsform ist vorgesehen, daß das Gehäuse schwenkbar am Sitz gehaltert ist und der Riegel aus einem schwenkbar im Gehäuse gelagerten und mit einer sägezahnartigen Verzahnung versehenen Hebel besteht, der im Abstand von der Lagerung durch einen Zapfen o.dgl. kurbelartig derart im Eingriff mit einem fahrzeugfesten Teil gehalten ist, daß bei einem Verschwenken des Gehäuses infolge eines auf dieses wirkenden Zuges der Hebel in Richtung auf den mit einer Gegenverzahnung versehenen Zugankers verschwenkt wird, so daß die Verzahnungen in Eingriff kommen und das Gehäuse mit dem Zuganker gekoppelt ist. Diese Ausgestaltung läßt die übliche Sitzverstellung zu, ohne daß durch diese auch das Gurtschloß relativ zu dem Sitz verlagert wird, so daß die zu sichernde Person das Gurtschloß immer an der gleichen gewohnten Stelle unabhängig von einer Verstellung des Sitzes findet. Um die Eingriffslage des Zugankers relativ zu dem der Verriegelung dienenden Hebel in einfacher Weise zu sichern, kann der Zuganker aus einem am Fahrzeug schwenkbar gelagerten Hebel bestehen, der im Führungsgehäuse geführt ist.

Nach einer weiteren besonders vorteilhaften Ausgestaltung ist vorgesehen, daß das fahrzeugfeste Halteteil aus einem schwenkbar gelagerten Führungsprofil besteht, an oder in dem teleskopartig ein schwenkbar mit einem Rahmen- oder Seitenblech des Sitzes verbundenes Profil längsverschieblich geführt ist, daß in einem Langloch o.dgl. des Profils ein mit einem Tragstück des Gurtschlosses verbundener Lagerzapfen geführt ist, auf den ein mit mindestens einem hakenartigen Fortsatz versehener Verriegelungshebel schwenkbar gelagert ist, und daß ein Einrichtung vorgesehen ist, die bei einem Auszug des Lagerzapfens relativ zu dem Profil den Verriegelungshebel in Richtung auf einen an dem Führungsprofil vorgesehene Lochreihe verschwenkt, so daß dessen hakenförmiger Fortsatz in verriegelnden Eingriff mit einem Loch der Lochreihe kommt. Diese Ausgestaltung der erfindungsgemäßen Vorrichtung gestattet eine kompakte und auch weitgehend gekapselte Bauweise.

Zweckmäßigerweise ist an dem Profil ein Endbereich einer Blattfeder befestigt, deren freies anderes Teil winkelig zu diesem steht und derart mit einem keilförmig abgeschrägten Bereich oder ein-em Widerlagerteil des Verriegelungshebels zusam-menwirkt, daß diesem bei seiner Auszugsbewegung eine Schwenkbewegung erteilt wird.

Ausführungsbeispiele der Erfindung werden nachstehend anhand der Zeichnung näher erläutert. In dieser zeigt

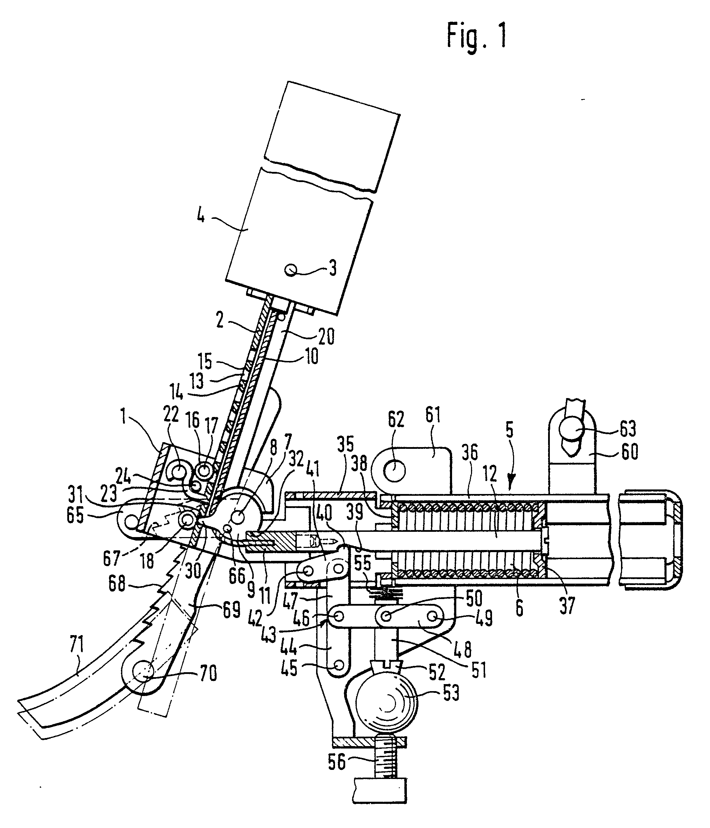

Fig.1 einen Längsschnitt durch einen Gurtstrammer mit einer bedarfsweise wirksam werdenden Verriegelung des Führungsgehäuses,

Fig.2 eine Seitenansicht einer Verriegelungseinrichtung für das Tragstück des Gurtschlosses in schematischer Darstellung,

Fig.3 einen Längsschnitt durch eine dritte Ausführungsform einer Verriegelungseinrichtung für das Tragstück des Gurtschlosses und

Fig.4 einen Schnitt durch die Verriegelungseinrichtung längs der Linie IV-IV in Fig.3

Das Führungsgehäuse 1 für die im Querschnitt U-förmige Führungsschiene 2, die gelenkig in dem Gelenk 3 mit dem Gurtschloß 4 verbunden ist, ist starr mit dem Federgehäuse 5 verbunden, in dem die vorgespannte Schraubenfeder 6 gehalten ist.

Das Führungsgehäuse 1 besteht aus einem U-förmig gebogenem Blechstück, wobei die Schenkel 7 die Seitenwände des Führungsgehäuses bilden und mit dem Federgehäuse 5 verbunden sind. Auf einer die Seitenwände 7 verbindenden Achse 8 ist die Führungsrolle 9 drehbar gelagert, über die das Zugseil 10 in einer Ringnut geführt ist. Das obere Ende des Zugseils 10 ist mit dem oberen Ende der Schiene 2 oder dem Gurtschloß 4 verbunden. Das andere Ende des Zugseils 10 ist über das Befestigungsstück 11 mit dem Zuganker 12 verbunden.

Die Schiene 2 ist in ihrem Stegteil mit eine Lochreihe bildenden etwa rechteckigen Durchbrüchen 13 versehen, die voneinander durch sprossenartige Stege 14 getrennt sind, die auf ihren von dem Gurtschloß 4 abgewandten Seiten abgerundete Flanken 15 aufweisen. Die Schiene stützt sich mit ihrem Stegteil in dem Führungsgehäuse 1 beidseits der Lochreihe auf Gleitbuchsen 16 ab, die auf Bolzen 17,18 aufgeschoben sind, die in den Seitenwandungen 7 gehaltert sind. Die Schenkel 20 der Schiene 2 fassen zwischen sich die Umlenkrolle 8 ein und sind mit ihren Stirnkanten auf der Achse 8 der Umlenkrolle geführt. Zur Führung der Stirnkanten der Schenkel 20 können auch besondere in den Seitenwänden 7 gehalterte Bolzen vorgesehen werden. Auf einem zwischen den Seitenwänden 7 gehalterten Bolzen 22 ist schwenkbar ein Verriegelungshebel 23 gelagert, der durch eine nicht dargestellte Schenkelfeder o.dgl. in Anlage gegen den ebenfalls zwischen den Seitenwänden 7 gehalterten Bolzen 24 gehalten ist. Befindet sich der Verriegelungshebel 23 in Anlage an dem Bolzen 24, greift er mit seinem keilförmig abgeschrägten Spitzenbereich in ein Loch 13 der Lochreihe der Schiene 2. Wird das Gurtschloß 4 in Richtung auf das Führungsgehäuse 1 verschoben, springt der Verriegelungshebel 23 ratschenartig über die sprossenartigen Stege 14, wobei er bei einer Rückzugsbewegung in eine Aussparung 13 einfällt und diese sperrt.

Die Umlenkrolle 9 ist seitlich der Ringnut für das Zugseil 10 mit nasenartigen Vorsprüngen 30 versehen, die in eine Aussparung 31 der Schiene greifen und diese dadurch in ihrer Normallage halten. Zur Sicherung dieser Normallage ist die Umlenkrolle 9 mit einer stufenartigen Kerbe 32 versehen, in die das Verbindungsstück 11 des in seiner Verriegelungsstellung befindlichen Zugankers 12 greift. Durch diese Verriegelung der Umlenkrolle 9 ist die Tragschiene 2 derart festgehalten, daß sie auch dann nicht herabgedrückt werden kann, wenn die Einführzunge des Gurtes mit größerer Kraft das Gurtschloß 4 eingedrückt wird. Das Führungsgehäuse 1 ist über Fortsätze seiner Seitenwände 7 mit einem Zwischengehäuse 35 verbunden, das mit dem zylinderartigen Gehäuse 36 verbunden ist, in dem die Schraubenfeder 6 angeordnet ist. Der Zuganker 12 durchsetzt die Schraubenfeder 6 und trägt an seinem Ende einen auf diesen aufgeschraubten Federteller 37. In der dargestellten verriegelten Stellung ist die Zugfeder 6 zwischen dem Federteller 37 und einer vorderen deckelartigen Gehäusewandung 38, die der Zuganker 12 in einer mittleren Bohrung durchsetzt, derart zusammengedrückt gehalten, daß deren Windungen etwa auf Block liegen.

Im Bereich des Zwischengehäuses 35 ist der Zuganker 12 in der auf Block gespannten Stellung der Druckfeder 6 mit einer Rastausnehmung 39 versehen, in die arretierend die Rastnase 40 eines Verriegelungshebels 41 greift, der auf dem Bolzen 42 schwenkbar in dem Zwischengehäuse 35 gelagert ist. Im Bereich des freien Endes des Verriegelungshebels 41 ist ein Hebel 42 des Kniehebels 43 angelenkt, dessen anderer Hebel 44 auf dem gehäusefesten Zapfen 45 gelagert ist. Auf dem die beiden Hebel 42,44 gelenkig verbindenden Kniegelenkzapfen 46 ist der Hebel 47 des zweiten Kniehebels 48 gelenkig gelagert, dessen anderer Hebel 48 auf einem gehäusefesten Zapfen 49 schwenkbar gelagert ist. Das Kniegelenk 50 dieses zweiten Kniehebels 48 trägt auf seiner Unterseite eine mit dem Haltestück 51 verbundene Pfanne 52, zwischen der und einem gehäusefesten Widerlager die Sensorkugel 53 des fahrzeugsensitiven Systems eingespannt ist. Auf das Kniegelenk 50 wirkt die Belastungsfeder 55, die mit ihrem oberen Ende auf dem Gehäuse 35,36 abgestützt ist. Das Widerlager für die Kugel 53 ist durch die Stirnfläche der Stellschraube 56 gebildet, durch die sich die Spannkraft einstellen läßt, mit der die Kugel 53 zwischen der Pfanne 52 und dem Widerlager gehalten ist. Die Haltekraft wird etwa so groß gewählt, daß die Kugel aus ihrer Halterung herausgerissen wird, wenn auf diese Beschleunigungswerte im Bereich von 5g wirken. Wird die Kugel 53 aus ihrem Sitz herausgeschleudert, kollabieren unter der Wirkung der Druckfeder 55 die Kniegelenke 48,43, so daß die Rastnase 40 aus der Rastausnehmung 39 des Zugankers 12 herausgezogen wird und der Zuganker unter Mitnahme des Schlosses 4 nach rechts bewegt wird. In der Endstellung wird nach der dadurch bewirkten Strammung des Gurtes die Tragschiene 2 durch den Riegel 23 verriegelt.

Das Gehäuse 5 ist durch die Traglaschen 60,61 mit einem Seitenblech o.dgl. des Sitzes verbunden. Dabei ist die Traglasche 61 in der Lagerbohrung 62 schwenkbar auf einem Lagerzapfen des Seitenbleches gelagert, während die Traglasche 60 mit einem Bolzen 63 versehen ist, der derart in einem Langloch des Seitenbleches geführt ist, daß das Gehäuse 5 um den Lagerzapfen der Traglasche 61 schwenken kann.

Auf der Achse 8 der Umlenkrolle 9 ist schwenkbar ein Verriegelungshebel 65 gelagert, der im Abstand von der Achse 8 mit einem kurbelartigen Zapfen 66 versehen ist, der in eine diesem zugeordnete Bohrung des Seitenbleches o.dgl. greift. Wird das Gehäuse 5 durch einen auf das Schloß 4 wirkenden Zug im Uhrzeigersinn verschwenkt, wird dem Verriegelungshebel 65 aufgrund der kurbelartigen Verbindung mit dem Seitenblech eine Schwenkbewegung im Gegenuhrzeigersinn erteilt. Der Verriegelungshebel ist in seinem vorderen Bereich mit einer sägezahnähnlichen Verzahnung 67 versehen, die durch Verschwenkung des Verriegelungshebels 65 in Eingriff mit der Verzahnung 68 eines Zugankers 69 kommt, der in seinem Gelenk 70 gelenkig mit dem Fahrzeug verbunden ist. Zur Sicherung der Eingriffsstellung ist der Zuganker 69 mit seiner Rückseite auf der Achse 8 der Umlenkrolle 9 geführt. Der Verstellbereich des Sitzes ist durch das Höhenverstellfeld 71 angedeutet. Unabhängig von der Verstellung des Sitzes kann somit im Gefahrenfall die Verzahnung 67 des Verriegelungshebels 65 in Eingriff mit der Verzahnung 68 des Zugankers 69 kommen, so daß das Führungsgehäuse 1 und damit die Tragschiene 2 unmittelbar mit dem Zuganker 69 gekuppelt ist.

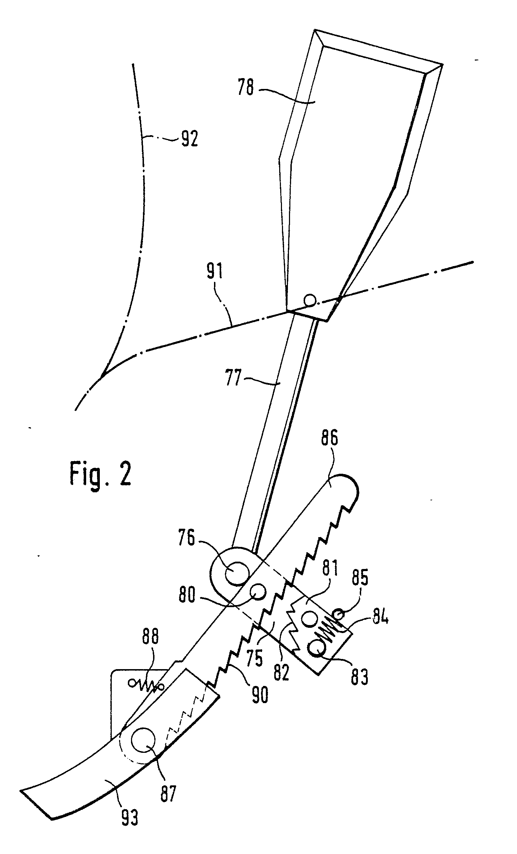

Bei der Ausführungsform nach Fig.2 ist der Verriegelungshebel 75 unmittelbar schwenkbar auf dem Gelenkbolzen 76 gelagert, der in entsprechenden Bohrungen am unteren Ende des Tragstücks 77 gehalten ist, das an seinem oberen Ende in üblicher Weise das Gurtschloss 78 trägt. Das Tragstück 77 kann aus einer Stange oder einem Profil bestehen. Es ist zusätzlich in nicht dargestellten Halterungen gehalten, so daß es nur begrenzt um den Gelenkbolzen 76 schwenken kann und im wesentlichen an einer Stelle verbleibt.

Im Abstand von dem Gelenkbolzen 76 ist der Verriegelungshebel mit einer Lagerbohrung 80 versehen, in die ein Lagerzapfen greift, der am Sitzrahmenblech oder an einem Seitenblech des Sitzes befestigt ist. Das freie Ende des Verriegelungshebels 75 ist mit einem Blechstück 81 vernietet, das auf seiner dem Lagerbolzen 76 zugewandten Seite mit einer sägezahnähnlichen Verzahnung 82 versehen ist. Weiterhin ist der Verriegelungshebel 75 im Bereich seines freien Endes mit einem Stift 83 versehen, auf den ein Ende der Zugfeder 84 eingehängt ist, deren anderes Ende auf dem an dem Sitzseitenblech o.dgl. vorgesehenen Haltestift 85 befestigt ist. Die Zugfeder 84 hält in der inaktiven Stellung den Verriegelungshebel 75 in der dargestellten Weise in Anlage an den Stift 85, der ein Widerlager für diesen bildet.

Am Boden des Fahrzeugs oder einem mit diesem verbundenen Teil, das hohe Zugkräfte aufnehmen kann, ist der Zuganker 86 um den Gelenkbolzen 87 schwenkbar gelagert. Der Zuganker ist durch eine Zugfeder 88, die einerseits an diesem und andererseits an einem fahrzeugfesten Teil befestigt ist, in Anlage an den Gelenkbolzen 76 gehalten, der über den Verriegelungshebel 75 oder das Tragstück 77 hinaus verlängert ist, um einen entsprechenden Anlagebereich zu schaffen. Auf seiner dem Gelenkbolzen 76 abgewandten Seite ist der Zuganker, der aus einem gestanzten Blechstück bestehen kann, mit einer Verzahnung 90 versehen.

Wird im Gefahrenfalle auf das Gurtschloß über den Gurt ein Zug ausgeübt, wirkt der Gelenkbolzen 76 gleichsam als Kurbel und verschwenkt den Verriegelungshebel 75 um den Zapfen 80, so daß die Verzahnungen 82, 90 des Verriegelungshebels und des Zugankers miteinander in verriegelnden Eingriff kommen.

Die Konturen des Sitzes 91 und der Rückenlehne 92 sind angedeutet worden, um darzustellen, daß sich das Gurtschloß 78 unabhängig von einer Sitzverstellung relativ zu dem Sitz immer in der gleichen Stellung befindet. Das Höhenverstellfeld 93 ist ebenfalls nur schematisch dargestellt worden.

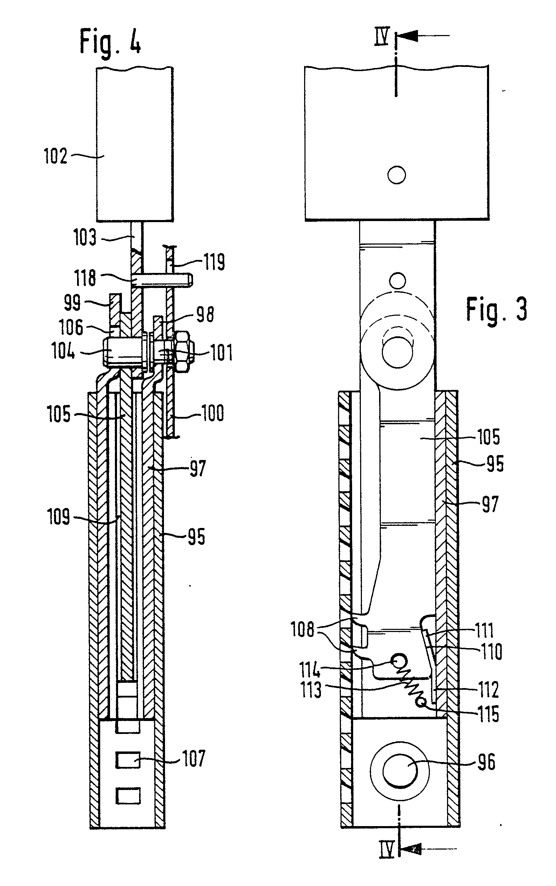

Bei dem Ausführungsbeispiel nach den Fig.3 und 4 besteht das fahrzeugfeste Halteteil oder der Zuganker aus einem Hohlprofil 95, das durch den Gelenkbolzen 96 an einem fahrzeugfesten Teil, beispielsweise der Führungsschiene des Sitzes, schwenkbar gelagert ist. Das Hohlprofil kann einen im wesentlichen C-förmigen Querschnitt aufweisen und aus Blech gebogen sein. In dem Hohlprofil 95 ist ein im Querschnitt C-förmiges Profil 97 teleskopartig längsverschieblich geführt. Das Profil 97 weist an seinem oberen Ende zwei zueinander parallele lappenförmige Verlängerungen 98,99 auf. Der dem Sitzrahmenblech 100 zugewandte lappenförmige Fortsatz 98 ist mit einer Bohrung versehen, die mit einer Bohrung des Sitzrahmenbleches 100 fluchtet. Durch die fluchtenden Bohrungen ist der Schraubbolzen 101 hindurchgeführt, der an dem Sitzrahmenblech 100 befestigt ist und auf dem in der Bohrung des lappenförmigen Fortsatzes 98 das Profil 97 schwenkbar gelagert ist.

Das Gurtschloß 102 ist an dem oberen Ende eines aus einem Blech 103 bestehenden Tragstücks schwenkbar gelagert. Das Tragstück 103 weist an seinem unteren Ende einen Lagerbolzen 104 auf, auf dem der Verriegelungshebel 105, der in das C-förmige Profil 97 ragt und dieses auf dem größten Teil seiner Länge durchsetzt, schwenkbar gelagert ist. Weiterhin greift der Lagerbolzen 104 in ein Langloch 106 des äußeren lappenartigen Fortsatzes 99 des Profils 97.

Das äußer Hohlprofil 95 ist in der dargestellten Weise in einer Seitenwand mit einer Reihe von Löchern 107 versehen. Diese Löcher 107 dienen zum Zwecke der Verrastung des Rasthebels 105 mit dem Hohlprofil 95 der Aufnahme von paarweise vorgesehenen Zähnen 108, wenn der Rasthebel 105 in Richtung auf die Lochreihe ausgeschwenkt wird. Das innere C-förmige Profil 107 weist seinen zwischen den Schenkeln gebildeten Längsschlitz 109 im Bereich der Lochreihe 107 auf, so daß im Bedarfsfalle der Verriegelungshebel 105 behinderungsfrei ausschwenken und die Zähne 108 in die Löcher 107 eingreifen können.

Um im Falle des Auszugs des Gurtschlosses 102 dem Verriegelungshebel eine Schwenkbewegung zu erteilen, ist der Verriegelungshebel 105 an seinem unteren Ende mit einer keilförmig abgeschrägten Flanke 110 versehen. Diese Flanke liegt an dem abgewinkelten Schenkel 111 einer Blattfeder an, deren anderer Schenkel 112 in der dargestellten Weise mit der dem Schlitz 109 gegenüberliegenden Wandung des Profils 97 vernietet ist.

Der Verriegelungshebel 105 ist durch eine entsprechend schräg angeordnete Zugfeder 113. die auf Stiften 114,115 des Verriegelungshebels und des Profils 97 befestigt ist, in Richtung auf seine untere inaktive Stellung beaufschlagt. Wird jedoch auf das Gurtschloß 102 ein Zug ausgeübt und dadurch der Lagerbolzen 104 an das obere Ende des Langloches 106 des Lappens 99 des Profils 97 bewegt, gleitet die keilförmige Flanke 110 auf dem Schenkel 111 der Blattfeder ab, so daß der Verriegelungshebel 105 in Fig. 3 im Uhrzeigersinn verschwenkt wird und die Zähne 108 in Eingriff mit den nächstliegenden Löchern 107 kommen. Dabei ist die Kraft der Blattfeder 111,112 so bemessen, daß diese bei einem Auszug des Verriegelungshebels 105 die Kraft der schwächeren Zugfeder 113 überwindet.

Um zu verhindern, daß das Tragstück 103 um den Gelenkbolzen 104 kippt, ist das Tragstück mit einem Stift 118 versehen, der in einem Langloch 119 des Sitzrahmenbleches 100 geführt ist.

## Ansprüche

1. Vorrichtung zum verriegelnden Ankoppeln des mit dem Gurtschloß, Endbeschlag oder Aufroller eines Sicherheitsgurtes versehenen Tragstückes im Gefahrenfall an ein fahrzeugfestes Halteteil, dadurch gekennzeichnet,
daß das Tragstück oder ein mit diesem verbundenes Gehäuseteil o.dgl. mit einem beweglichen Kupplungsteil verbunden ist, das in einer Führung eines Sitzrahmenbleches o.dgl. derart geführt oder derart getriebemäßig mit diesem verbunden ist, daß ein auf das Gurtschloß ausgeübter Zug dieses in seinen kuppelnden Eingriff mit dem fahrzeugfesten Halteteil bewegt.

2. Vorrichtung nach Anspruch 1. dadurch gekennzeichnet, daß an den unteren Endbereich des Tragstücks (77) ein das erste Kupplungsteil bildender, mit einer Verzahnung (82) versehener Verriegelungshebel (75) angelenkt ist, der im Abstand von seiner Gelenkachse (76) mit einer Bohrung (80) oder einem Zapfen versehen ist, die kurbelartig mit einem Zapfen oder einer Bohrung des Sitzrahmenbleches o.dgl. in der Weise verbunden sind, daß ein auf das Tragstück (77) ausgeübter Zug den Verriegelungshebel (75) in Richtung auf einen gelenkig am Fahrzeug gehaltenen und mit einer Gegenverzahnung (90) versehenen Zuganker (86) verschwenkt, so daß die Verzahnungen (82.90) in kuppelnden Eingriff miteinander kommen.

3. Vorrichtung nach Anspruch 1 oder 2. dadurch gekennzeichnet, daß der Verriegelungshebel (75) an seinem freien Ende ein verzahntes Teil (81) mit gegen die Schwenkachse (76) gerichteten Zähnen (82) trägt.

4. Vorrichtung nach einem der Ansprüche 1-3, dadurch gekennzeichnet, daß der Zuganker (86) durch eine Feder (88) in Anlage an die verlängerte Schwenkachse (76) des Tragstücks (77) oder an ein mit diesem verbundenes Teil in Eingriffposition gehalten ist.

5. Vorrichtung nach Anspruch 1, dadurch gekennzeichnet, daß das Tragstück (2) in einem vorzugsweise am Fahrzeugsitz befestigten Gehäuse (1) im Gefahrenfalle verriegelbar und mit dem Gehäuse (1) ein Riegel (65) verbunden ist, der formschlüssig in einen mit dem Fahrzeug fest verbundenen Zuganker (69) einfällt, wenn auf das Gehäuse über das Tragstück des Gurtschlosses (4) ein Zug ausgeübt wird.

6. Vorrichtung nach Anspruch 5, dadurch gekennzeichnet, daß das Gehäuse (1,5) schwenkbar am Sitz gehaltert ist und der Riegel (65) aus einem schwenkbar im Gehäuse (1) gelagerten und mit einer sägezahnartigen Verzahnung (67) versehenen Hebel (65) besteht, der im Abstand von der Lagerung (8) durch einen Zapfen (66) o.dgl. kurbelartig derart im Eingriff mit einem fahrzeugfesten Teil gehalten ist, das bei einem Verschwenken des Gehäuses (1,5) infolge eines auf dieses wirkenden Zuges der Hebel (65) in Richtung auf den mit einer Gegenverzahnung (68) versehenen Zuganker (69) verschwenkt wird, so daß die Verzahnungen (67,68) in Eingriff miteinander kommen und das Gehäuse (1) mit dem Zuganker (69) gekoppelt ist.

7. Vorrichtung nach Anspruch 5 oder 6, dadurch gekennzeichnet, daß der Zuganker (69) aus einem am Fahrzeug schwenkbar gelagerten Hebel besteht, der in dem Gehäuse (1) geführt ist.

8. Vorrichtung nach Anspruch 1. dadurch gekennzeichnet, daß das fahrzeugfeste Halteteil aus einem schwenkbar gelagerten Führungsprofil (95) besteht, an oder in dem teleskopartig ein schwenkbar mit einem Rahmen- oder Seitenblech (100) des Sitzes verbundenes Profil (97) längsverschieblich geführt ist, daß in einem Langloch (106) o.dgl. des Profils (97) ein mit dem Tragstück (103) des Gurtschlosses (102) verbundener Lagerzapfen (104) geführt ist, auf dem ein mit mindestens einem hakenartigen Fortsatz (108) versehener Verriegelungshebel (105) schwenkbar gelagert ist, und daß eine Einrichtung vorgesehen ist, die bei einem Auszug des Lagerzapfens (104) relativ zu dem Profil (97) den Verriegelungshebel (105) in Richtung auf eine an dem Führungsprofil vorgesehene Lochreihe verschwenkt, so daß dessen hakenartiger Fortsatz (108) in verriegelnden Eingriff mit einem Loch (107) der Lochreihe kommt.

9. Vorrichtung nach Anspruch 8, dadurch gekennzeichnet, daß an dem Profil (97) ein Endbereich (112) einer Blattfeder befestigt ist, deren freies anderes Teil (111) winkelig zu diesem steht und derart mit einem keilförmig abgeschrägten Bereich (110) oder einem Widerlager des Verriegelungshebels (105) zusammenwirkt, daß diesen bei seiner Auszugsbewegung eine Schwenkbewegung in Richtung auf die Lochreihe erteilt wird.

Fig. 1

Fig. 2

Fig. 4

Fig. 3

Europäisches Patentamt

**EUROPÄISCHER RECHERCHENBERICHT**

Nummer der Anmeldung

EP 88 11 1719

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-2 104 062  (DAIMLER-BENZ AG)<br>* Insgesamt * | 1-5,8,9 | B 60 R 22/26 |
| A | | 6,7 | |
| | --- | | |
| X | FR-A-2 429 125  (DAIMLER-BENZ AG)<br>* Ansprüche 1,2; Figur 1 * | 1-5 | - |
| A | | 6-9 | |
| | --- | | |
| X | EP-A-0 015 179  (PEUGEOT, CITROEN)<br>* Anspruch 1; Figuren 1,2 * | 1 | |
| | --- | | |
| P,X | EP-A-0 265 747  (DAIMLER-BENZ AG)<br>* Spalte 3, Zeile 1 - Spalte 4, Zeile 39; Figuren 1-9 * | 1-5,8,9 | |
| A | | 6,7 | |
| | --- | | |
| A | US-A-4 239 260  (HOLLOWELL)<br>* Spalte 1, Zeile 40 - Spalte 2, Zeile 22; Figuren 1-11 * | 8,9 | |
| | ----- | | |

RECHERCHIERTE SACHGEBIETE (Int. Cl.4)

B 60 R

Der vorliegende Recherchenbericht wurde für alle Patentansprüche erstellt

| Recherchenort | Abschlußdatum der Recherche | Prüfer |
|---|---|---|
| DEN HAAG | 24-10-1988 | MAUSSER,T. |